Europäisches Patentamt

European Patent Office

Office européen des brevets

(19)

(11) EP 0 926 795 A1

(12) **EUROPEAN PATENT APPLICATION**

(43) Date of publication:
**30.06.1999 Bulletin 1999/26**

(51) Int Cl.⁶: **H02H 6/00**, H01H 47/26

(21) Application number: **98403268.0**

(22) Date of filing: **22.12.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **22.12.1997 FR 9716239**

(71) Applicant: **VALEO ELECTRONIQUE**
**94000 Creteil (FR)**

(72) Inventor: **Iacovella, Rocco**
**94400 Vitry sur Seine (FR)**

(74) Representative: **Texier, Christian**
**Cabinet Regimbeau,**
**26, Avenue Kléber**
**75116 Paris (FR)**

(54) **Electronic control circuit for a relay, especially for supply control of a heatable element of a windshield or rear window of an automobile**

(57) Circuit électronique de commande d'un relais de puissance comprenant au moins un contact et une bobine dont l'alimentation commande le déplacement dudit contact, circuit comportant des moyens de mesure de température et une unité de gestion qui commande l'alimentation de l'enroulement du relais et qui inhibe ladite alimentation lorsqu'une température trop importante pour ledit relais est détectée, caractérisé en ce que lesdits moyens de mesure de température comportent des moyens pour déterminer la valeur de la résistance de la bobine.

FIG.1

## Description

La présente invention concerne la protection des circuits électroniques de commande à relais de forte puissance.

L'invention trouve notamment avantageusement application pour la protection du relais d'alimentation d'un élément chauffant d'un pare-brise ou d'une lunette arrière de véhicule automobile. On sait en effet qu'un tel élément chauffant peut consommer jusqu'à 300 Watts. Or, le relais qui le commande est situé à l'intérieur de l'habitacle du véhicule, dans un module dans lequel la dissipation des calories est mal assurée ; ledit relais contribue donc à élever la température à l'intérieur du boîtier dudit module et pénalise les autres fonctions mises en oeuvre par celui-ci.

L'échauffement d'un relais - et donc sa fiabilité - est lié à deux paramètres principaux :

- l'échauffement de sa bobine : celui-ci dépend essentiellement de la tension d'utilisation (tension de la batterie du véhicule) et croît très vite aux fortes tensions (proportionnellement au carré de la tension),
- l'échauffement du contact qui est actionné par ladite bobine : cet échauffement dépend du courant qui le traverse mais aussi de sa valeur ohmique. Cette valeur ohmique peut fortement varier du fait du vieillissement du contact, ou encore du fait d'oxydations ou tout simplement de déformations mécaniques.

Dans certaines applications à fort courant où la température atteinte par le relais est critique, à la fois pour la fonction assurée par celui-ci, mais aussi pour son environnement, il est nécessaire d'adjoindre au relais des circuits de protection qui visent à limiter sa température.

Généralement, ces circuits de protection comportent des composants complémentaires qui directement ou indirectement contribuent à protéger le relais.

Ces composants complémentaires sont par exemple des composants du type de ceux connus par l'Homme du Métier sous la dénomination "Polyswitch" qui interrompent le courant à la manière d'un fusible lorsque leur température dépasse 130°C. Cet échauffement du composant est provoqué autant par le courant qui le traverse (effet Joule) que par la température ambiante. Ceci procure une protection homogène quelle que soit la température environnante. Par rapport à des composants de type fusible, les composants "Polyswitch" présentent l'avantage de pouvoir être réarmés.

Il est également connu d'utiliser comme composant complémentaire un capteur de température placé au plus près du relais et reliés à des moyens qui inhibent la commande du relais lorsque le signal reçu en sortie dudit capteur correspond à une température trop élevée.

Toutefois, ces différentes solutions - qui nécessitent des composants complémentaires particuliers - sont coûteuses et parfois peu satisfaisantes. Notamment, la disjonction par polyswitch ne permet pas de tenir compte des dérives de résistances des contacts et donc de l'incidence de l'échauffement associé. Et dans les solutions utilisant un capteur de température, celui-ci n'est jamais parfaitement juxtaposé au relais, de sorte qu'il ne détecte pas instantanément les augmentations de température dudit relais.

Un but de l'invention est de pallier ces différents inconvénients et de proposer une solution :

- qui ne nécessite pas de composant supplémentaire coûteux,
- qui permet des temps de réponse courts,
- qui permet de prendre en compte la température réelle du relais, et notamment à la fois l'échauffement de la bobine et l'échauffement du contact.

Ainsi l'invention propose un circuit électronique de commande d'un relais de puissance comprenant au moins un contact et une bobine dont l'alimentation commande le déplacement dudit contact, circuit comportant des moyens de mesure de température et une unité de gestion qui commande l'alimentation de l'enroulement du relais et qui inhibe ladite alimentation lorsqu'une température trop importante pour ledit relais est détectée, caractérisé en ce que lesdits moyens de mesure de température comportent des moyens pour déterminer la valeur de la résistance de la bobine.

Avantageusement, lesdits moyens comportent des moyens pour la mesure d'une tension aux bornes d'une résistance montée en série avec la bobine, l'unité de gestion comportant des moyens pour déterminer la valeur de la résistance de la bobine en fonction de ladite mesure.

On notera que les caractéristiques de variation de résistance du cuivre en fonction de la température sont bien connues. Le coefficient de variation de la résistance en fonction de la température est invariable et est voisin de 0, 4 % °C.

Avantageusement, l'unité de gestion comporte des moyens pour comparer la valeur ainsi obtenue à une valeur seuil, l'alimentation de la bobine étant inhibée lorsque la valeur déterminée est supérieure à ladite valeur seuil.

Selon un mode de mise en oeuvre préférentiel, l'unité de gestion comporte des moyens de mémorisation de type EEPROM dans laquelle est mémorisée une mesure de la résistance de la bobine réalisée à température ordinaire et la valeur seuil est fonction de cette valeur mémorisée.

L'invention concerne également un circuit électronique de commande d'un relais pour la commande de l'alimentation d'un élément chauffant de pare-brise ou de lunette arrière de véhicule automobile, caractérisé en ce qu'il est constitué par un circuit du type précité.

Elle concerne en outre un module de gestion destiné à être disposé à l'intérieur d'un habitacle de véhicule automobile comportant un boîtier et un circuit électronique qui comporte un relais de puissance et qui est disposé à l'intérieur dudit boîtier, caractérisé en ce que ledit circuit comporte un circuit de commande de relais selon l'une des revendications précédentes.

D'autres caractéristiques de l'invention ressortiront encore de la description qui suit qui est purement illustrative et non limitative et qui doit être lue en regard des dessins annexés sur lesquels :

- la figure 1 est un schéma illustrant un mode de réalisation possible pour l'invention ;
- la figure 2 est un schéma illustrant un autre mode de réalisation possible de l'invention.

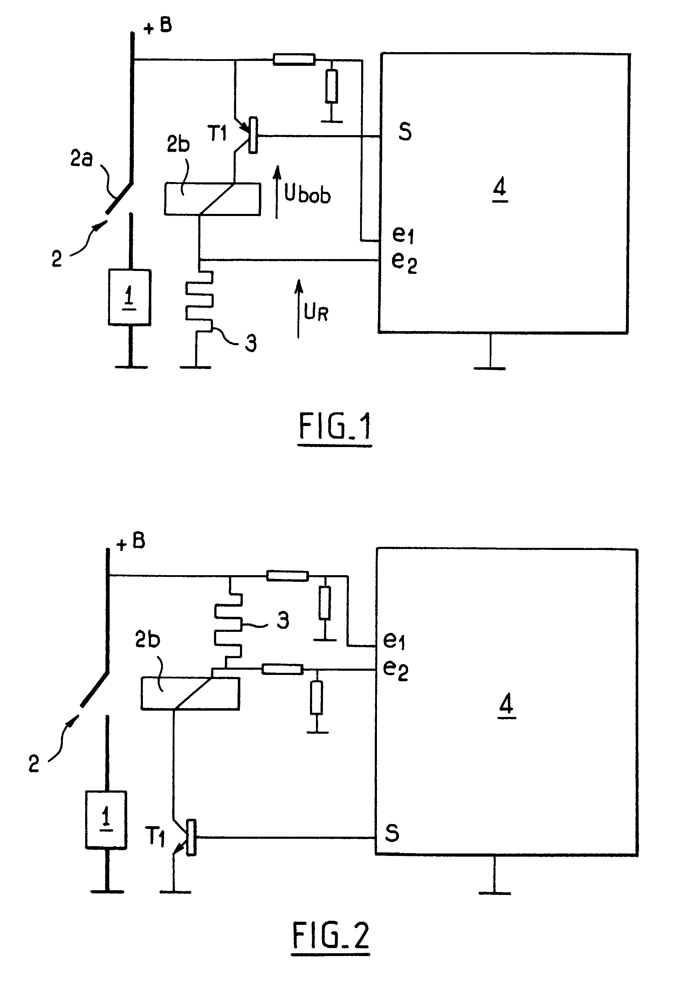

On a représenté sur la figure 1 la charge 1 que constitue l'élément chauffant d'un pare-brise ou d'une lunette arrière de véhicule automobile, ainsi que le relais 2 qui commande l'alimentation de cette charge 1.

Dans cet exemple, la charge 1 est montée entre la masse et une borne d'alimentation +B à la tension de la batterie.

Le relais 2 est constitué d'un contact 2a interposé entre la charge 1 et la borne +B, ainsi que d'une bobine 2b dont l'alimentation actionne la fermeture du contact 2a.

La bobine 2b est reliée d'une part à la masse et d'autre part, à son extrémité opposée, à la borne d'alimentation +B par l'intermédiaire d'un interrupteur commandé T1, qui dans l'exemple illustré est un transistor PNP.

La base de ce transistor T1 est commandée en tension par une sortie s d'un microprocesseur 4, qui reçoit sur des entrées e1 et e2 de conversion analogique/numérique, d'une part une tension représentative de la tension $U_{+B}$ de la borne +B et d'autre part la tension $U_R$ aux bornes d'une résistance de mesure 3.

Cette résistance 3 est utilisée pour mesurer le courant réel qui circule dans la bobine et de permettre ainsi de déterminer la résistance de la bobine, donc sa température.

Plus précisément, le microcontrôleur 4 calcule la valeur ohmique $R_{bobine}$ de la résistance de la bobine à partir des valeurs mesurées pour $U_{+B}$ et UR, ainsi que de la valeur ohmique R de la résistance 3 ;

$$R_{bobine} = R. \frac{U_{+B} - U_R}{U_R},$$

Il compare cette valeur à une valeur seuil préalablement mémorisée.

Lorsque cette valeur seuil est dépassée, le microcontrôleur 4 inhibe la commande de la bobine en bloquant le transistor T1.

Selon la précision que l'on souhaite obtenir, et en particulier selon que l'on souhaite ou non tenir compte de la dispersion des résistances de bobine, cette valeur seuil peut être ou non fonction d'une mesure initiale réalisée en usine sur la résistance de la bobine, dont on mémorise la valeur dans une mémoire EEPROM du microcontrôleur 4.

Dans le cas où on ne dispose pas d'une mesure de la résistance de la bobine, le seuil est déterminé à partir d'une valeur moyenne de la résistance des bobines. L'écart type par rapport à une telle valeur moyenne est couramment de 10 % ce qui n'entraîne qu'une erreur de l'ordre de 20 °C.

On a illustré sur la figure 2 une autre variante de réalisation également possible. Dans cette variante, l'alimentation de la bobine 2b est réalisée par un transistor T2 de NPN connecté entre ladite bobine et la masse. La résistance 3 est montée entre l'extrémité de la bobine 2b opposée au transistor 2 et la borne +B.

On notera que dans l'un et l'autre des deux exemples qui viennent d'être décrits, la résistance 3 est un composant peu coûteux. En outre, les structures proposées présentent l'avantage de ne pas nécessiter de composant de mesure à proximité de la bobine ; la valeur de la résistance de la bobine est mesurée de façon fiable quelque soit la position de la résistance 3 par rapport à ladite bobine.

**Revendications**

1. Circuit électronique de commande d'un relais de puissance comprenant au moins un contact et une bobine dont l'alimentation commande le déplacement dudit contact, circuit comportant des moyens de mesure de température et une unité de gestion qui commande l'alimentation de l'enroulement du relais et qui inhibe ladite alimentation lorsqu'une température trop importante pour ledit relais est détectée, caractérisé en ce que lesdits moyens de mesure de température comportent des moyens pour déterminer la valeur de la résistance de la bobine.

2. Circuit selon la revendication 1, caractérisé en ce que lesdits moyens comportent des moyens pour la mesure d'une tension aux bornes d'une résistance montée en série avec la bobine, l'unité de gestion comportant des moyens pour déterminer la valeur de la résistance de la bobine en fonction de ladite mesure.

3. Circuit selon la revendication 2, caractérisé en ce que l'unité de gestion comporte des moyens pour comparer la valeur ainsi obtenue à une valeur seuil, l'alimentation de la bobine étant inhibée lorsque la valeur déterminée est supérieure à ladite valeur seuil.

**4.** Circuit selon la revendication 3, caractérisé en ce que l'unité de gestion comporte des moyens de mémorisation de type EEPROM dans laquelle est mémorisée une mesure de la résistance de la bobine réalisée en usine et en ce que la valeur seuil est fonction de cette valeur mémorisée.

**5.** Circuit électronique de commande d'un relais pour la commande de l'alimentation d'un élément chauffant de pare-brise ou de lunette arrière de véhicule automobile, caractérisé en ce qu'il est constitué par un circuit selon l'une des revendications précédentes.

**6.** Module de gestion destiné à être disposé à l'intérieur d'un habitacle de véhicule automobile comportant un boîtier et un circuit électronique qui comporte un relais de puissance et qui est disposé à l'intérieur dudit boîtier, caractérisé en ce que ledit circuit comporte un circuit de commande de relais selon l'une des revendications précédentes.

FIG.1

FIG.2

**Office européen des brevets**

## RAPPORT DE RECHERCHE EUROPEENNE

Numéro de la demande

EP 98 40 3268

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | EP 0 726 632 A (RAYMOND CORP) 14 août 1996 * colonne 4, ligne 16 - colonne 5, ligne 51; figures 3-5 * | 1-6 | H02H6/00 H01H47/26 |
| Y | US 5 483 139 A (WELLES II KENNETH B) 9 janvier 1996 * colonne 3, ligne 25 - ligne 61; figure 1 * | 1-6 | |

| | | | DOMAINES TECHNIQUES RECHERCHES (Int.Cl.6) |
|---|---|---|---|
| | | | H02H H01H |

Le présent rapport a été établi pour toutes les revendications

| Lieu de la recherche | Date d'achèvement de la recherche | Examinateur |
|---|---|---|
| LA HAYE | 30 mars 1999 | Salm, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**
EP 98 40 3268

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-03-1999

| Document brevet cité au rapport de recherche | Date de publication | Membre(s) de la famille de brevet(s) | Date de publication |
|---|---|---|---|
| EP 0726632 A | 14-08-1996 | AUCUN | |
| US 5483139 A | 09-01-1996 | AUCUN | |

Pour tout renseignement concernant cette annexe : voir Journal Officiel de l'Office européen des brevets, No.12/82